Europäisches Patentamt

European Patent Office

Office européen des brevets

(11) Publication number: **0 071 464**
**A1**

## (12) EUROPEAN PATENT APPLICATION

(21) Application number: **82303970.6**

(22) Date of filing: **27.07.82**

(51) Int. Cl.³: **H 04 R 1/10**

(30) Priority: **29.07.81 JP 119885/81**

(43) Date of publication of application:
**09.02.83 Bulletin 83/6**

(84) Designated Contracting States:
**DE FR GB**

(71) Applicant: **Matsushita Electric Industrial Co., Ltd.**
**1006, Oaza Kadoma**
**Kadoma-shi Osaka-fu, 571(JP)**

(72) Inventor: **Kikkawa, Tohru**
**17-3, Korigaoka-1-chome**
**Hirakata-shi(JP)**

(72) Inventor: **Kusumoto, Shoichi**
**13-22, Amamiminami-4-chome**
**Matsubara-shi(JP)**

(72) Inventor: **Inaba, Atsushi**
**11-10, Korinishinomachi**
**Neyagawa-shi(JP)**

(72) Inventor: **Yamauchi, Kenji**
**1-4-1101, Tamagushicho-3-chome**
**Higashiosaka-shi(JP)**

(72) Inventor: **Inagaki, Michio**
**174, Koyodai**
**Ikoma-shi(JP)**

(74) Representative: **Woodin, Anthony John et al,**
**Fitzpatricks Kern House 61/62 Lincoln's Inn Fields**
**London WC2B 6EX(GB)**

(54) Headphones.

(57) A headphone (30) including a housing (5), a speaker unit (7) received in the housing, an ear pad (3) secured to the front side of the housing, a head band (17), an input cord (22), a plug (11) and a mating jack (18), one of the plug and jack being provided on a portion of the housing for electrical connection to the speaker unit, the other of the plug and jack being provided on the end of the head band for connection to the input cord. The plug and jack are adapted to engage each other, thus permitting the housing to be joined to the head band. The plug and jack can be rotated relative to each other about their axes when engaged.

FIG. 4

HEADPHONES

BACKGROUND OF THE INVENTION

This invention relates to a headphone including a housing accomodating a speaker unit and releasably attached to a head band.

Headphones are known which include a head band made of a resilient material, a housing accomodating a speaker unit and joined to the head band, an ear pad attached to the front side of the housing and an input cord extending from the housing. With the arrangement of the conventional headphones, the mounting and dismounting of the speaker unit are impossible, which causes inconvenience in storing or carrying such headphone since same must be stored or carried without being subject to disassembly.

SUMMARY OF THE INVENTION

The headphone of this invention is devoid of the above disadvantage and is handy to store and carry when not in use, owing to the arrangement in which a housing accomodating a speaker unit is releasably mounted on a head band.

The headphone of this invention includes a plug provided on a housing receiving therein a speaker unit and for feeding signals to the speaker unit, and a mating jack provided on a head band, thus making the housing releasable from the head band.


DESCRIPTION OF THE DRAWINGS

Figure 1 is a side elevational view showing essential parts of a prior headphone;

Figure 2 is a side elevational view showing essential parts of a headphone according to an embodiment of the invention;

Figure 3 is a side elevational view showing the headphone of Figure 2 in disassembled condition; and

Figure 4 is an exploded, sectional side elevational view of the headphone of Figure 2.


DESCRIPTION OF THE PREFERRED EMBODIMENT

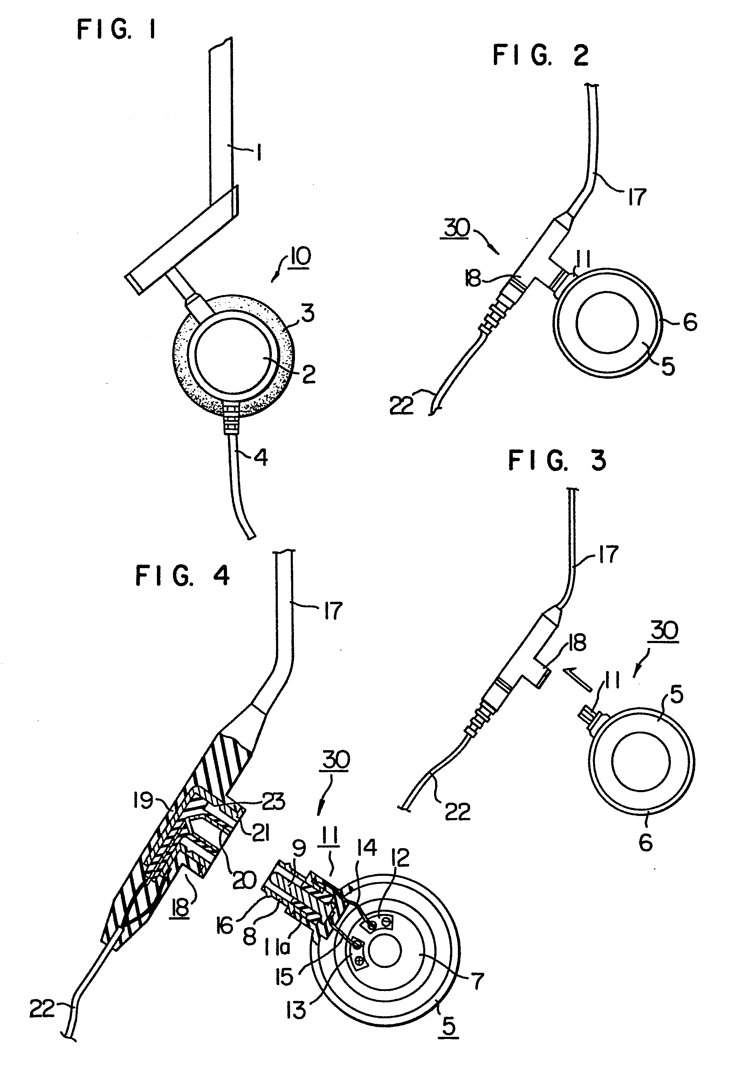

Figure 1 shows a prior art headphone 10 which includes a head band 1 made of a resilient material, a housing 2 receiving therein a speaker unit and joined to the head band, an ear pad 3 attached to the front side of the housing 2 and an input cord 4 extending from the housing 2. With the arrangement of the prior headphone, it is impossible to disassemble the speaker unit from the headphone 10, so that an inconvenience is caused in storing or carrying the same since it must be done so without disassembly.

Referring now to Figures 2 to 4, there is shown a headphone 30 according to the invention, which includes a housing 5, an ear pad 6 attached to the front side of said housing 5, a speaker unit 7 securely received in said housing 5, a plug 11 provided on the periphery of said housing 5, a head band 17 made of a resilient material, a jack 18 provided on the end of said head band 17, and an input cord 22 connected to the end of said jack 18. The plug 11 comprises a cylindrical terminal 8, a rod-like terminal 9 disposed coaxial with said cylindrical terminal 8, and an insulator 10 for insulating said terminals from each other. The terminals 8 and 9 of the plug 11 are electrically connected through lead wires 14 and 15 to plate terminals 12 and 13 of the speaker unit 7, respectively. The cylindrical terminal 8 is formed at its peripheral surface adjacent its tip end with a peripheral ridge 16 which serves for prevention of disengagement of the plug 11 and jack 18.

The jack 18 is adapted to mate with the plug 11, and includes a small diameter cylindrical terminal 20 and a large diameter cylindrical terminal 21 which is disposed coaxial with said cylindrical terminal 20 and insulated therefrom by an insulator 19. The terminals 20 and 21 of the jack 18 are electrically connected to the input cord 22. The large diameter cylindrical terminal 21 is formed at its inner peripheral surface with a groove 23 which is adapted to be engaged by the ridge 16 of the plug 11.

When the plug 11 secured to the housing 5 is forcedly fitted in the jack 18 mounted on the head band 17, the terminal 9 engages the terminal 20 and the terminal 8 engages the terminal 21 with the ridge 16 of the terminal 8 fitted in the groove 23 of the terminal 21.

In this state of engagement, the plug 11 and jack 18 can rotate about their axes. When signals are transmitted through the input cord 22 to the headphone, the speaker unit 7 is correspondingly put in operation to make sounds.

In the above embodiment, the plug is mounted on the housing which receives therein the speaker unit, and the jack is mounted on the head band. However, the plug may be mounted on the head band and the jack may be mounted on the housing.

As described above, the headphone of the invention is constructed such that the housing receiving therein a speaker unit can be disengaged from the head band. Accordingly, the headphone can be compactly stored or carried by disengaging the housing from the head band when the headphone is not in use. With the arrangement of the headphone according to the invention, it is possible to replace the housing by one which receives therein a speaker unit of a different performance. In addition, the housing can be rotated relative to the head band by means of the plug and jack connection to permit control of position, thus improving readiness in putting on the headphone.

CLAIMS

1.        In a headphone (30) including a housing (5), a speaker unit (7) received in said housing, an ear pad (3) secured to the front side of said housing, a head band (17) and an input cord (22), the improvement comprising a plug (11) and a mating jack (18), one said plug and said jack being provided on a portion of said housing for electrical connection to said speaker unit, the other of said plug and said jack being provided on the end of said head band for connection to said input cord, said plug being adapted to engage said jack to permit said housing to be joined to said head band.

2.        A headphone as set forth in claim 1 wherein said plug or said jack on said housing can be rotated relative to said plug or said jack on said head band about their axes when engaged by each other.

FIG. 1

FIG. 2

FIG. 3

FIG. 4

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| | --- | | H 04 R    1/10 |
| X | DE-A-2 353 261   (SENNHEISER) *Page 5, lines 1-7* | 1 | |
| | --- | | |
| A | US-A-3 971 900   (FOLEY) *Figures  9-10;  column  4, lines 37-46* | 2 | |
| | --- | | |
| A | US-A-4 273 969   (FOLEY) *Figure 6; column 2, lines 36-51* | 2 | |
| | ----- | | |

TECHNICAL FIELDS SEARCHED (Int. Cl. ³)

H 04 M
H 04 R

The present search report has been drawn up for all claims

| Place of search | Date of completion of the search | Examiner |
|---|---|---|
| THE HAGUE | 19-10-1982 | GULDNER H.A. |